# EUROPÄISCHE PATENTSCHRIFT

(11) **EP 1 863 587 B1**
(45) Veröffentlichungstag und Bekanntmachung des Hinweises auf die Patenterteilung: **27.08.2014**
(21) Anmeldenummer: 06725310.4
(22) Anmeldetag: 24.03.2006
(51) Int. Cl.: B01J 31/14, B01J 31/22, C08F 4/02, C08F 4/52

(54) **KATALYSATORSYSTEM AUS EINEM TRÄGER UND EINEM CO-KATALYSATOR**
CATALYST SYSTEM CONSISTING OF A CARRIER AND OF A CO-CATALYST
SYSTEME CATALYSEUR CONSTITUE D'UN SUPPORT ET D'UN CO-CATALYSEUR

(30) Priorität: 24.03.2005 DE 102005014396
(43) Veröffentlichungstag der Anmeldung: 12.12.2007
(73) Patentinhaber: Sachtleben Chemie GmbH, 47198 Duisburg (DE); Studiengesellschaft Kohle mbH, 45470 Mülheim an der Ruhr (DE)
(72) Erfinder: HIRTHE, Bernd, 47918 Tönisvorst (DE); PROFT, Bernd, 47506 Neukirchen-Vluyn (DE); WINKLER, Jochen, 47509 Rheurdt (DE); BLUMENTHAL, Udo, 45470 Mühlheim/ruhr (DE); FINK, Gerhard, 45470 Mühlheim/ruhr (DE); HAUSCHILD, Klaus, 47055 Duisburg (DE)
(74) Vertreter: Uppena, Franz
(86) Internationale Anmeldenummer: PCT/EP2006/061040
(87) Internationale Veröffentlichungsnummer: WO 2006/100307

(56) Entgegenhaltungen:
- EP-A- 1 046 656
- EP-A- 1 116 732
- EP-A- 1 231 225
- WO-A-03/035707
- US-A- 5 227 440
- US-A- 5 648 580
- US-B1- 6 489 410
- FISCHBACH A. ET AL.: "Stereospecific Polymerization of Isoprene with Molecular and MCM-48 Grafter Lanthanide(III) Tetraalkylaluminates" ANGEW. CHEM. INT. ED., Bd. 43, 2004, Seiten 2234-2239, XP002386400
- TAGUCHI A ET AL: "Ordered mesoporous materials in catalysis" MICROPOROUS AND MESOPOROUS MATERIALS, ELSEVIER SCIENCE PUBLISHING, NEW YORK, US, Bd. 77, Nr. 1, 3. Januar 2005 (2005-01-03), Seiten 1-45, XP004657174 ISSN: 1387-1811
- KANTAM ET AL: "Nanoparticle supported bis (cyclopentadienyl) zirconium dichloride catalysts for styrene polymerization" JOURNAL OF MOLECULAR CATALYSIS. A, CHEMICAL, ELSEVIER, AMSTERDAM, NL, Bd. 240, Nr. 1-2, 3. Oktober 2005 (2005-10-03), Seiten 103-108, XP005046408 ISSN: 1381-1169

## Beschreibung

Gegenstand der vorliegenden Erfindung sind Katalysatorsysteme aus einem Träger und einem Co-Katalysator sowie deren Verwendung zur Olefinpolymerisation.

Titanhaltige Katalysatorsysteme zur Olefinpolymerisation sind seit langem bekannt. Insbesondere die Chloride TiCl₄ und TiCl₃ wurden von Ziegler et al. als Katalysatoren unter Verwendung von Co-Katalysatoren (z.B. Triethylaluminium) zur Polyolefiinsynthese erstmals eingesetzt. Derzeit verwendet man Ziegler-Systeme in Form von geträgerten Katalysatoren, bei denen die Aktivkomponente (z.B. TiCl₄ bzw. auch Metallocenverbindungen) auf inerte oder Hydroxylgruppenhaltige Träger unter Ausnutzung ihrer spezifischen Eigenschaften wie Partikelgröße, Porösität, spez. Oberfläche usw. abgeschieden wird. Hierzu werden die Träger gemäß den morphologischen Anforderungen zunächst hergestellt und in den nächsten Schritten mit den Aktivkomponenten und Co-Katalysatoren belegt.

Aufgabe der vorliegenden Erfindung war, Träger mit speziellen morphologischen Eigenschaften zu entwickeln, die ohne die übliche Katalysator-Beschichtung Olefine unter Normaldruck und Raumtemperatur polymerisieren.

Erfindungsgemäß wird die Aufgabe durch ein Katalysatorsystem aus einem Träger und einem Co-Katalysator gelöst, welches ausschließlich aus einem Träger und einem Co-Katalysator besteht, wobei der Träger ein katalytisch aktives Titandioxid-Pulver ist, das mit einem Co-Katalysator beschichtet ist, welcher ausgewählt ist aus Aluminiumalkylen, beispielsweise Trimethylaluminium oder Aluminoxanen, beispielsweise "Methylaluminoxan" (MAO). Zur Polymerisation der Olefine unter Normaldruck und Raumtemperatur werden die erfindungsgemäßen Katalysatorsysteme in einem inerten Lösungsmittel, einem inerten Lösungsmittelgemisch oder in der Gasphase mit dem entsprechenden Olefin versetzt. Auf diese Weise sind überraschenderweise Polymere zugänglich.

Mit Hilfe des erfindungsgemäßen Verfahrens werden industriell gut verarbeitbare feine Polymerpulver hoher Schüttdichte und von hohen bis ultrahohen Molekulargewichten gewonnen. Als Katalysatorbestandteil wird nur Titandioxid, und ein Aluminoxan bzw. Aluminiumalkyl benötigt. Dabei kann das Verhältnis von Titan zu Aluminium, erfindungsgemäß außergewöhnlich niedrig eingestellt werden, ein Verhältnis, das bisher mit anderen Katalysatorsystemen nicht erreichbar war. Erfindungsgemäß vorgesehen sind Verhältnisse von kleiner als 1:1, vorzugsweise 1:0,5. Das System ist auch ohne Metallocenzusatz aktiv und arbeitet halogenfrei.

Bei Einsatz des erfindungsgemäßen Katalysatorsystems bei Polymerisationen kann die Polymerisation ohne aufwendige Umrüstung in bestehenden Anlagen durchgeführt werden. Die Polymerisation lässt sich auch leicht in der Gasphase (Wirbelschicht- oder Loopreaktor) durchführen, wobei ebenfalls ein sehr feines Polymerpulver erhalten wird; es werden bei der Gasphasenpolymerisation überraschenderweise auch keinerlei Wandbeläge im Reaktor beobachtet.

Mit der vorliegenden Erfindung sind erstmals polymerisationsaktive Katalysatoren zugänglich, die ausschließlich aus einem Träger und einem Co-Katalysator, bei Verwendung von Titandioxidpulver, ausschließlich aus Titandioxid und Aluminiumalkylen, bestehen. Damit sind erstmals Polymerisationskatalysatoren mit einen Ti:Al-Verhältnis kleiner als 1:1, sowie Zieglertyp-Polymerisationskatalysatoren mit einem Ti:Al-Verhältnis kleiner als 1:1, die mehr als Polymerspuren produzieren, zugänglich.

Zur Herstellung der erfindungsgemäßen Katalysatorsysteme eignen sich besonders poröse Titandioxidtypen. Beispiele solcher Titandioxidtypen sind die Titandioxidtypen vom Typ E3-588-12-001 oder E3-585-111-003 (Hersteller: Sachtleben Chemie GmbH).

Die thermische Trocknung und Aktivierung des erfindungsgemäß ausgewählten Titandioxids, erfolgt dabei erfindungsgemäß bei Mengen bis zu 20 Gramm vorzugsweise im Vakuum. Dazu wird beispielsweise das Titandioxid in einem Röhrenofen, beispielsweise in einem Quarzrohr, im Vakuum bei ausreichend hohen Temperaturen, beispielsweise bei Temperaturen von 50-200°C, vorzugsweise bei 80-130°C, ausreichend lange, beispielsweise für bis zu 24h, vorzugsweise für 1 bis 8h, behandelt und unter inerter Atmosphäre langsam abgekühlt. Die weitere Verarbeitung und Aufbewahrung erfolgt vorzugsweise unter Schutzgas.

Die thermische Trocknung und Aktivierung des erfindungsgemäß ausgewählten Titandioxids, bei größeren Mengen erfolgt erfindungsgemäß durch azeotrope Destillation, beispielsweise durch Zugabe von Toluol und unter Kochen am Rückfluss. Über einen Wasserabscheider wird das ausgeschleppte Wasser abgetrennt und entfernt. Nach Beendigung der Wasserabscheidung, Filtration, Waschen und Entfernung des Restlösemittels im Vakuum ist das erfindungsgemäß ausgewählte Titandioxid, zur Weiterverarbeitung fertig. Die weitere Verarbeitung und Aufbewahrung erfolgt vorzugsweise unter Schutzgas.

Das auf diese Weise vorbehandelte erfindungsgemäß ausgewählte und vorbehandelte Titandioxid, wird mit einer, den Co-Katalysator in einem geeigneten Lösungsmittel enthaltenden Lösung, beispielsweise in einer toluolischen Lösung, suspendiert. Zur Beschichtung des Pulvers wird die Suspension gerührt und vorzugsweise erwärmt, beispielsweise auf 60°C, nach dem Erkalten filtriert, gewaschen und getrocknet.

Die Polymerisation der Olefine mit den erfindungsgemäßen Katalysatorsystemen und die Aufarbeitung der erhaltenen Polymere erfolgt nach den dem Fachmann an sich bekannten Verfahren.

Die nachfolgenden Beispiele sollen die Erfindung näher erläutern, ohne sie einzuschränken.

### 1. Herstellung des Katalysators

### 1.1 Titandioxid

Zur Herstellung des Katalysators eignen sich besonders poröse Titandioxidtypen. Beispielhaft genannt seien die Titandioxidtypen vom Typ E3-588-12-001 oder E3-585-111-003 (Hersteller: Sachtleben Chemie GmbH).

### 1.2 Stufe 1 - Trocknung und Aktivierung des Titandioxids

### 1.2.1 Stufe 1a - Thermisch im Vakuum

Die thermische Trocknung und Aktivierung des Titandioxids erfolgt bei Mengen bis zu 20 Gramm Titandioxid erfindungsgemäß in einem Quarzrohr. Dazu wird das Titandioxid in einem Röhrenofen über ca. 8h im Vakuum bei 80-130°C behandelt und unter inerter Atmosphäre langsam abgekühlt. Die weitere Verarbeitung und Aufbewahrung erfolgte unter Schutzgas.

### Beispiel 1.2.1-1

6,3 g TiO₂ vom Sachtleben-Typ E3-588-12-001 wurden im Quarzrohr in einem Röhrenofen auf 80°C aufgeheizt. Nach ca. 1 Stunde wird ein Vakuum von ca. 10⁻² Torr angelegt und die Temperatur auf 130°C erhöht. Nach insgesamt 8 Stunden erhält man 5,16 g eines leicht beigefarbenen Titandioxids.

### 1.2.2 Stufe 1b - Azeotrop mit Toluol als Schleppmittel

Die thermische Trocknung und Aktivierung des Titandioxids bei größeren Mengen erfolgt erfindungsgemäß durch Zugabe von Toluol und unter Kochen am Rückfluss. Über einen Wasserabscheider wird das ausgeschleppte Wasser abgetrennt und entfernt. Nach etwa 8 Stunden scheidet sich kein Wasser mehr ab. Nach Filtration, Waschen mit Pentan und Entfernung des Restlösemittels im Vakuum ist das Titandioxid zur Weiterverarbeitung fertig. Die weitere Verarbeitung und Aufbewahrung erfolgte Schutzgas.

### Beispiel 1.2.2-1

150 g Titandioxid vom Sachtleben-Typ E3-585-111-003 wurden in 500 ml Toluol 8 Stunden am Rückfluss gekocht und über einen Wasserabscheider ca. 9,0 ml Wasser abgeschieden. Danach wurde das Titandioxid abfiltriert, mit Pentan gut gewaschen und im Vakuum einer Ölpumpe getrocknet. Auswaage 143,2 g.

Die Elementaranalyse ergab einen Titangehalt von 52,01 Gew.% Titan (Theorie Titandioxid = 59,94% Ti)

### 1.3 Stufe 2 - Umsetzung mit Methylaluminoxan bzw. Trimethylaluminium

Das aus nach 1.2.1 oder 1.2.2 vorbehandelte Titandioxid wird mit einer toluolischen Methy(aluminoxan- bzw. Trimethylaluminiumlösung suspendiert und auf 60°C erwärmt, nach dem Erkalten filtriert, gewaschen und getrocknet.

### Beispiel 1.3-1

In einem Rundkolben wurden 9,72 g eines nach Beispiel 1.2.2-1 azeotrop getrockneten Titandioxids in 210 ml Toluol suspendiert und bei Raumtemperatur unter Rühren 29,16 ml 10%ige Methylaluminoxanlösung in Toluol (beispielsweise EURECEN Al 5100-10-Toluol; Hersteller: Crompton GmbH) innerhalb von 10 Minuten zugetropft. Die Suspension wurde für 1 Stunde auf 60°C erwärmt. Nach dem Abkühlen wurde filtriert, gewaschen und getrocknet. Es wurden 14,52 g eines grau-blauen Pulvers erhalten.

| | |
|---|---|
| Elementaranalyse: | Titan 8,20 % = 1,712 mAt/g |
| | Aluminium 1,33 % = 0,493 mAt/g |
| | Verhältnis Ti : Al = 1 : 0,29 |

### Beispiel 1.3-2

In einem Rundkolben wurden 11,0 g eines nach Beispiel 1.2.2-1 azeotrop getrockneten Titandioxids vorgelegt und bei Raumtemperatur unter Rühren mit 5,53 ml Trimethylaluminium in 240 ml Toluol suspendiert. Die Suspension wurde für 1 Stunde auf 60°C erwärmt. Nach dem Abkühlen wurde filtriert, gewaschen und getrocknet. Es wurden 12,0 g eines grau-blauen Pulvers erhalten, Das Produkt wurde sofort zur Polymerisation weiter umgesetzt (siehe 2.2).

### 2. Beschreibung der Polymerisationen

### 2.1. Polymerisation mit Aluminoxan-geträgertem Titandioxid

### 2.1.1 mit Methylaluminoxan in Suspension

### Beispiel 2.1-1

12,14 g eines nach Beispiel 1.3-1 hergestellten Methylaluminoxan-geträgerten Titandioxids (Ti:Al = 1:0,42) wurde in 240 ml Toluol suspendiert, mit 2 ml konzentriertem Tri-isobutylaluminium (als in der Polymerisationstechnik üblich eingesetzter Scavenger) versetzt und quantitativ in einen 500 ml BÜCHI^{®}-Glasautoklaven gehebert. Der Autoklav war mit einem fast bodengängigem Flügelrührer bestückt und wurde mit ca. 1200 Upm gerührt. Durch kurzzeitiges Evakuieren wurde der Argonpartialdruck in der Suspension herabgesetzt, der Reaktor auf 60°C aufgeheizt und anschließend mit 2 bar Ethylendruck beaufschlagt; der Ethendruck wurde bei 2 bar konstant gehalten. Die Polymerisation begann bei der Ethenzugabe sofort. Nach ca. 6 Minuten stellte sich eine kontinuierliche Ethenaufnahme von etwa 150 Nml Ethen pro Minute ein. Nach 3,98 h Polymerisationszeit wurde die Polymerisation durch Zugabe von Methanol gestoppt. Die Ethenaufnahme betrug zu dieser Zeit noch 140 Nml Ethen pro Minutel Gesamtverbrauch Ethen 38,273 NI entsprechend 1,707 Mol.

Die Aufarbeitung des Polymerisats erfolgte wie folgt: Der Reaktorinhalt wurde mit etwa gleicher Volumenmenge Methanol verdünnt und mit 5 ml konzentrierter Salzsäure einige Stunden gerührt. Nach dem Abfiltrieren wurde das Polymerisat mit Methanol säurefrei gewaschen, filtriert und im Vakuumtrockenschrank bei 30°C getrocknet. Es wurden 60,88 g eines feinen weißen Pulver ausgewogen.

| | |
|---|---|
| Massenbilanz: 1,707 Mol Ethen= | 47,88 g PE |
| | 12,14 g Einwaage Titandioxid-Kat. |
| | 60,02 g Einsatz |
| | 60,68 g Auswaage (101,9%) |

Ausgehend von den Massenbilanzwerten (12,14 g Titandioxid in 60,68 g Produkt) lässt sich ein TiO₂-Füllungsgrad von 20 Gew.% berechnen.

| | |
|---|---|
| Analytik: | **IR**> nachweisbar sind Banden für lineares PE, von 500 -1150 cm⁻¹ breiter Absorptionsbereich des Titandioxids. |
| | **DSC >** Schmelzpunkt 135°C (Peak), Beginn des Schmelzvorgangs bei ca. 95°C |
| | **Schüttdichte:** 0,23 [kg/l] |

### Beispiel 2.1-2

13,7 g eines nach Beispiel 1.3-1 hergestellten Methylaluminoxan-geträgerten Titandioxids (Ti:Al = 1:1) wurde in 240 ml Toluol suspendiert, und anschließend wie in Beispiel 2.1-1 beschrieben weiter verfahren. Die Polymerisation beginnt bei der Ethenzugabe sofort. Nach ca. 3 Minuten stellte sich eine kontinuierliche Ethenaufnahme von etwa 50 Nml Ethen pro Minute ein. Nach 3,3 h Polymerisationszeit wurde die Polymerisation durch Zugabe von Methanol gestoppt. Die Ethenaufanhme betrug zu dieser Zeit noch 40 Nml Ethen pro Minute! Gesamtverbrauch Ethen 10,583 NI entsprechend 0,472 Mol. Die Aufarbeitung des Polymerisats erfolgte wie in Beispiel 2.1-1 beschrieben. Es wurden 28,42 g eines feinen weißen Pulvers isoliert.

| | |
|---|---|
| **Massenbilanz:** | |
| 0,472 Mol Ethen= | 13,24 g PE |
| | 12,64 g Einwaage Titandioxid-Kat. |
| | 25,88 g Einsatz |
| | 28,42 g Auswaage (101,9%) |

Ausgehend von den Massenbilanzwerten (12,64 g Titandioxid in 28,42 g Produkt) lässt sich ein TiO₂-Füllungsgrad von 44,5 Gew.% berechnen.

| | |
|---|---|
| Analytik: | **DSC** > Schmelzpunkt 136,5°C (Peak), Beginn des Schmelzvorgangs bei ca. 65°C ! |
| | |
| | **Schüttdichte:** 0,2 [kg/l] |

### 2.1.2 mit Methylaluminoxan in der Gasphase

### Beispiel 2.1-4

Auf eine D4-Glasmantelfritte wurden bei 60°C Manteltemperatur 0,7 g eines nach Beispiel 1.3-2 hergestellten Methylaluminoxan-geträgerten Titandioxids (Ti:Al = 1:0,42) von unten mit Ethen angeblasen und so eine Wirbelschicht erzeugt. Es setzte sofort Polymerisation ein. Wurde die Ethenzufuhr gestoppt, entstand in der Anlage sofort ein merklicher Unterdruck! Es wurden nach ca. 30 Minuten Polymerisationszeit 0,89 g feinkörniges Pulver isoliert.

| | | |
|---|---|---|
| Analytik: | **IR** > | nachweisbar sind Banden für lineares PE, von 500 - 1250 cm⁻¹ breiter Absorptionsbereich des Titandioxids. |
| | **DSC** > | Schmelzpunkt 134°C (Peak), Beginn des Schmelzvorgangs bei ca. 85°C |

### Beispiel 2.1-5

In einen 500ml-Stahlautoklaven wurden 0,65 g eines nach Beispiel 1.3-2 hergestellten Methylaluminoxan-geträgerten Titandioxids (Ti:Al = 1:0,42), eingebracht und mit 7,8 bar Ethen beaufschlagt. Ohne Rühren wurde für 4,33 Stunden bei 60°C Manteltemperatur polymerisiert. Im Stahlautoklaven wurde überraschenderweise kein Wandbelag festgestellt. Es wurden 21,7 g feinpulvriges Polymer (entsprechend 21,05 g PE = 0,75 Mol Ethen) ausgewogen (aufgrund der in diesem Versuch nicht optimalen Versuchsbedingungen (schlechte Wärmeabfuhr, da nicht gerührt) war ein kleiner Teil des Polymerpulvers zusammengeschmolzen). Dies entspricht einer Katalysatoraktivität von 7,48 g PE pro g Kat und Stunde. Der Titandioxidgehalt / Füllgrad beträgt knapp 3%.

| | | |
|---|---|---|
| Analytik: | **IR** > | nachweisbar sind Banden für lineares PE. Kein Titandioxid nachweisbar. |
| | **DSC** > | Schmelzpunkt 132°C (Peak), Beginn des Schmelzvorgangs bei ca. 65°C |
| | | |
| | **Schüttdichte:** | 0,35 [kg/l] |

### 2.2 Suspensionspolymerisation in Suspension mit AlMe₃-geträgertem Titandioxid

### Beispiel 2.2-1

11,5 g eines nach Beispiel 1.3-3 hergestellten Trimethylaluminiumgeträgerten Titandioxids (Ti:Al = 1:0,42) wurden in 240 ml Toluol suspendiert, und anschließend wie in Beispiel 2.1-1 beschrieben weiter verfahren. Die Polymerisation begann bei der Ethenzugabe sofort. Nach ca. 2 Minuten stellte sich eine kontinuierliche Ethenaufnahme von etwa 48 Nml Ethen pro Minute ein. Nach 2,6 h Polymerisationszeit wurde die Polymerisation durch Zugabe von Methanol gestoppt. Die Ethenaufnahme betrug zu dieser Zeit noch 40 Nml Ethen pro Minute! Gesamtverbrauch Ethen 8,16 NI entsprechend 0,364 Mol.

| | |
|---|---|
| Massenbilanz: | |
| 0,364 Mol Ethen= | 10,21 g PE |
| | 11,15 g Einwaage Titandioxid-Kat. |
| | 21.36 g Einsatz |
| | 23,15 g Auswaage (108,4%) |

Ausgehend von den Massenbilanzwerten (11,15 g Titandioxid in 23,15 g Produkt) lässt sich ein TiO₂-Füllungsgrad von 48,2 Gew.% berechnen.

| | | |
|---|---|---|
| Analytik: | **DSC** > | 137°C (Peak), Beginn des Schmelzpunkt Schmelzvorgangs bei ca. 65°C |
| | | |
| | **Schüttdichte:** | 0,25 [kg/l] |

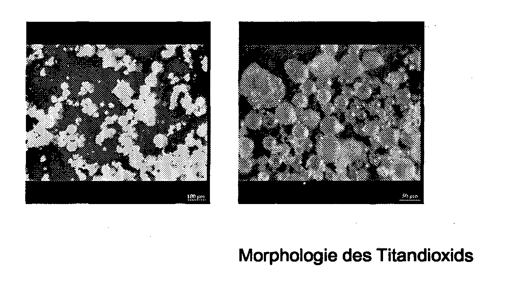

## Patentansprüche

1. Katalysatorsystem aus einem Träger und einem Co-Katalysator, **dadurch gekennzeichnet, dass** es ausschließlich aus einem Träger und einem Co-Katalysator besteht und der Träger ein katalytisch aktives Titandioxid-Pulver ist, das mit einem Co-Katalysator beschichtet ist, welcher ausgewählt ist aus Aluminiumalkylen und / oder Aluminoxanen.

2. Katalysatorsystem gemäß Anspruch 1, **dadurch gekennzeichnet, dass** der Co-Katalysator ausgewählt ist aus Trimethylaluminium und / oder Methylaluminoxan (MAO).

3. Katalysatorsystem gemäß Anspruch 1 oder 2, **dadurch gekennzeichnet, dass** das Titan zu Aluminiumverhältnis kleiner als 1 : 1 ist.

4. Katalysatorsystem gemäß Anspruch 3, **dadurch gekennzeichnet, dass** das Titan zu Aluminiumverhältnis 1 : 0,5 ist.

5. Verfahren zur Herstellung eines Katalysatorsystems gemäß einem oder mehreren der Ansprüche 1 bis 4, **dadurch gekennzeichnet, dass** das Titandioxid-Pulver thermisch getrocknet und aktiviert wird, das aktivierte Pulver anschließend in einer, den Co-Katalysator in einem geeigneten Lösungsmittel enthaltenden Lösung suspendiert wird, die Suspension gerührt und gegebenenfalls erwärmt wird und das beschichtete Pulver nach dem Erkalten filtriert, gewaschen und getrocknet wird.

6. Verwendung des Katalysatorsystems gemäß einem oder mehreren der Ansprüche 1 bis 4 zur Polymerisation von Olefinen.

## Claims

1. A catalyst system consisting of a support and a co-catalyst, **characterised in that** it consists exclusively of a support and a co-catalyst, and the support is a catalytically active titanium-dioxide powder which is coated with a co-catalyst chosen from aluminium alkyls and/or aluminoxanes.

2. A catalyst system according to claim 1, **characterised in that** the co-catalyst is chosen from trimethylaluminium and/or methylaluminoxane (MAO).

3. A catalyst system according to claim 1 or 2, **characterised in that** the titanium-to-aluminium ratio is less than 1:1.

4. A catalyst system according to claim 3, **characterised in that** the titanium-to-aluminium ratio is 1:0.5.

5. Process for the preparation of a catalyst system according to one or more of claims 1 to 4, **characterised in that** the titanium-dioxide powder is thermally dried and activated, the activated powder is then suspended in a solution containing the co-catalyst in a suitable solvent, the suspension is stirred and optionally heated, and the coated powder, after being cooled, is filtered, washed and dried.

6. Use of the catalyst system according to one or more of claims 1 to 4 for the polymerisation of olefins.

## Revendications

1. Système catalyseur formé d'un support et d'un co-catalyseur, **caractérisé en ce qu'**il est exclusivement constitué d'un support et d'un co-catalyseur et **en ce que** le support est du dioxyde de titane en poudre, doté d'une certaine activité catalytique, qui est enrobé d'un co-catalyseur choisi parmi les composés de type alkyl-aluminium et/ou les composés de type aluminoxane.

2. Système catalyseur conforme à la revendication 1, **caractérisé en ce que** le co-catalyseur est choisi parmi du triméthyl-aluminium et/ou du méthyl-aluminoxane (MAO).

3. Système catalyseur conforme à la revendication 1 ou 2, **caractérisé en ce que** le rapport du titane à l'aluminium est inférieur à 1/1.

4. Système catalyseur conforme à la revendication 3, **caractérisé en ce que** le rapport du titane à l'aluminium vaut 1/0,5.

5. Procédé de préparation d'un système catalyseur conforme à l'une ou plusieurs des revendications 1 à 4, **caractérisé en ce que** l'on chauffe le dioxyde de titane en poudre pour le faire sécher et l'activer, puis on met cette poudre activée en suspension dans une solution contenant le co-catalyseur dans un solvant approprié, on agite la suspension et en option, on la chauffe, et après refroidissement, on récupère par filtration la poudre enrobée, on la lave et on la fait sécher.

6. Utilisation d'un système catalyseur conforme à l'une ou plusieurs des revendications 1 à 4 pour la polymérisation d'oléfines.
